# EUROPÄISCHE PATENTSCHRIFT

(11) **EP 3 729 737 B1**
(45) Veröffentlichungstag und Bekanntmachung des Hinweises auf die Patenterteilung: **05.01.2022**
(21) Anmeldenummer: 18807020.5
(22) Anmeldetag: 14.11.2018
(51) Int. Cl.: H04L 12/40, H04L 29/08

(54) **FELDBUSKOMPONENTE MIT EINSTELLELEMENT ZUR KONFIGURIERUNG DER DATENÜBERTRAGUNG IN EINE CLOUD**
FIELDBUS COMPONENT WITH A SETTING ELEMENT FOR CONFIGURING DATA TRANSFER TO A CLOUD
COMPOSANT DE BUS DE TERRAIN COMPRENANT UN ÉLÉMENT DE RÉGLAGE POUR LA CONFIGURATION DE LA TRANSMISSION DE DONNÉES À UN NUAGE

(30) Priorität: 19.12.2017 DE 102017130517
(43) Veröffentlichungstag der Anmeldung: 28.10.2020
(73) Patentinhaber: Endress+Hauser Process Solutions AG, 4153 Reinach (CH)
(72) Erfinder: PÖSCHMANN, Axel, 4057 Basel (CH); MAYER, Michael, 4104 Oberwil (CH)
(74) Vertreter: Andres, Angelika Maria
(86) Internationale Anmeldenummer: PCT/EP2018/081181
(87) Internationale Veröffentlichungsnummer: WO 2019/120770

(56) Entgegenhaltungen:
- US-A1- 2011 145 094
- US-A1- 2012 281 708
- US-A1- 2017 351 226

## Beschreibung

Die Erfindung betrifft eine Feldbuskomponente sowie ein Feldbusnetzwerk mit einer Feldbuskomponente. Darüber hinaus betrifft die Erfindung ein Verfahren zum Übertragen von Daten von einer Feldbuskomponente in eine Cloud.

In der Automatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Zur Protokollierung, Dokumentation und späteren Auswertung der innerhalb eines Feldbusnetzwerks anfallenden Daten können das Feldbusnetzwerk bzw. einzelne Feldgeräte des Feldbusnetzwerks mit einem Zugang zu einer Cloud ausgestattet sein. Auf diese Weise können ausgewählte Parameter der Feldgeräte sowie beispielsweise Daten zur Überwachung des Gerätezustands in die Cloud geschrieben werden.

Die US 2017/351226 A1 offenbart ein Verfahren zur Analyse der Leistung industrieller Automatisierungssysteme über mehrere Anlagen hinweg. Cloud-Agent-Geräte werden in den jeweiligen Netzwerken der Anlagen, welche Netzwerke beispielsweise Feldbusse umfassen, installiert. Dadurch werden die Cloud-Agent-Geräte mit weiteren in den Netzwerken befindlichen industriellen Geräten vernetzt. Die Cloud-Agent-Geräte sind dazu ausgestaltet, ausgewählte Datensätze der industriellen Geräte zu sammeln und an ein Indexierungssystem eines Diagnose- und Wartungssystems zu übermitteln.

Aufgabe der Erfindung ist es, ein Feldbuskomponente sowie ein Verfahren zur Übertragung von Daten von einer Feldbuskomponente in eine Cloud bereitzustellen, bei der die Konfiguration der Datenübertragung in die Cloud vereinfacht ist.

Gelöst wird diese Aufgabe durch die in den Ansprüchen 1, 13 und 16 angegebenen Merkmale.

Vorteilhafte Weiterentwicklungen der Erfindung sind in den Unteransprüchen angegeben.

Eine Feldbuskomponente entsprechend den Ausführungsformen der Erfindung ist dazu ausgelegt, an eine Cloud zu übertragende Daten entweder in einem ersten Datenübertragungsmodus in eine Public Cloud oder in einem zweiten Datenübertragungsmodus in eine private Cloud zu übertragen. Dabei umfasst die Feldbuskomponente ein Einstellelement, das wahlweise in eine erste Einstellung oder in eine zweite Einstellung bringbar ist. Die Feldbuskomponente ist dazu ausgelegt, falls sich das Einstellelement in der ersten Einstellung befindet, an eine Cloud zu übertragende Daten entsprechend dem ersten Datenübertragungsmodus in die Public Cloud zu übertragen und, falls sich das Einstellelement in der zweiten Einstellung befindet, an eine Cloud zu übertragende Daten entsprechend dem zweiten Datenübertragungsmodus in die private Cloud zu übertragen.

Bei Feldbuskomponenten besteht in zunehmendem Maße das Bedürfnis, erfasste Messwerte, Parameterwerte und Konfigurationsdaten sowie Daten zur Zustandsüberwachung und zur Diagnose des Gerätezustands von der Feldbuskomponente aus in eine Cloud zu speichern. Hierzu besteht die Möglichkeit, die Daten in eine Public Cloud zu übermitteln und dort abzuspeichern. In einer Public Cloud können die Daten mehrerer Kunden gespeichert sein. Bei einigen Kunden ist es jedoch unter Aspekten der Datensicherheit erwünscht, die Daten nicht in eine Public Cloud, sondern stattdessen in eine private Cloud zu speichern. Auf eine private Cloud kann beispielsweise nur ein Kunde oder eine ausgewählte Gruppe von Kunden zugreifen. Beispielsweise können Cloudeinträge auf einem firmeneigenen Host gespeichert werden. Insofern besteht ein Bedürfnis, eine Feldbuskomponente entweder so zu konfigurieren, dass in die Cloud zu übertragende Daten gemäß einem ersten Datenübertragungsmodus in die Public Cloud gespeichert werden, oder die jeweilige Feldbuskomponente so zu konfigurieren, dass die Daten entsprechend einem zweiten Datenübertragungsmodus in eine private Cloud übertragen werden. Es wird vorgeschlagen, diese Einstellung des Übertragungsmodus mittels eines Einstellelements an der Feldbuskomponente vorzunehmen. Durch das Einstellelement, welches beispielsweise als Umschalter oder als Steckelement realisiert sein kann, wird eine besonders einfach und schnell durchzuführende Möglichkeit der Konfiguration der Feldbuskomponente geschaffen. Dies ermöglicht insbesondere in größeren Produktionsumgebungen mit einer Vielzahl von Feldbuskomponenten eine schnelle Konfiguration, ob die Daten zur Public Cloud oder zu einer privaten Cloud übertragen werden sollen. Insbesondere ist es bei dieser Lösung nicht erforderlich, die Feldbuskomponente über eine Schnittstelle wie beispielsweise Bluetooth oder WLAN mittels einer Gerätekonfigurationssoftware zu konfigurieren. Eine derartige Konfiguration über Schnittstellen mittels Software wird vom Kunden stets als aufwändig und unbequem empfunden. Darüber hinaus stellt die Gerätekonfiguration über derartige Schnittstellen ein zusätzliches Sicherheitsrisiko dar, weil jede Schnittstelle eine potentielle Sicherheitslücke für ein Automatisierungsnetzwerk darstellt und einen Angriffskanal für unberechtigte Zugriffe eröffnet. Das einfache Hardwareelement, das in mindestens zwei mögliche Einstellungen gebracht werden kann, kommt ohne Softwareschnittstellen und sonstige Hilfsmittel aus. Dadurch wird die Sicherheit der Feldbuskomponente erhöht, da in der Feldbuskomponente weniger Schnittstellen vorgesehen werden müssen. Ein weiterer Vorteil der erfindungsgemäßen Lösung ist eine einfachere Integration in explosionsgeschützte Umgebungen, eine einfachere Integration in Umgebungen, in denen Schutz gemäß der Schutzklasse IP67 besteht oder in denen spezielle Staubbeziehungsweise Hygieneanforderungen erfüllt werden müssen. Anstelle von aufwändigen Stecker- oder Schnittstellenlösungen wird einfach ein 1-Bit-Einstellelement bereitgestellt.

Gemäß einer bevorzugten Lösung wird der Domainname der privaten Cloud, an die die Daten übermittelt werden sollen, mittels eines hierfür vorgesehenen Erzeugungsschemas generiert, beispielsweise unter Verwendung der lokalen Domain, in der die Feldbuskomponente sich befindet. Bei Verwendung eines derartigen Erzeugungsschemas werden sowohl die Adressierung der Public Cloud als auch die Adressierung der privaten Cloud vom Feldgerät selbsttätig durchgeführt, sodass sich der Benutzer um die Details der Konfiguration nicht zu kümmern braucht.

Ein Feldbusnetzwerk entsprechend den Ausführungsformen der Erfindung umfasst einen Feldbus, eine an den Feldbus angeschlossene Feldbuskomponente wie oben beschrieben sowie ein an den Feldbus angeschlossenes Anbindungsgerät oder einen an den Feldbus angeschlossenen Cloudserver.

Ein Verfahren entsprechend den Ausführungsformen der Erfindung dient zum Übertragen von Daten von einer Feldbuskomponente in eine Cloud, wobei die Feldbuskomponente dazu ausgelegt ist, an eine Cloud zu übertragende Daten entweder in einem ersten Datenübertragungsmodus in eine Public Cloud oder in einem zweiten Datenübertragungsmodus in eine private Cloud zu übertragen. Die Feldbuskomponente umfasst ein Einstellelement, das wahlweise in eine erste Einstellung oder in eine zweite Einstellung bringbar ist. Das Verfahren umfasst Überführen des Einstellelements der Feldbuskomponente in eine erste Einstellung oder in eine zweite Einstellung, sowie Übermitteln der in eine Cloud zu übertragenden Daten in die Public Cloud, falls sich das Einstellelement in der ersten Einstellung befindet, oder Übermitteln der in eine Cloud zu übertragenden Daten in die private Cloud, falls sich das Einstellelement in der zweiten Einstellung befindet.

Nachfolgend ist die Erfindung anhand von in der Zeichnung dargestellten Ausführungsbeispielen näher erläutert. Es zeigen:
Figur 1 die Funktionsweise des hardwareimplementierten Einstellelements;
Figur 2 ein Feldgerät, das in einem ersten Datenübertragungsmodus Clouddaten an eine Public Cloud übermittelt;
Figur 3 ein Feldgerät, das in einem zweiten Datenübertragungsmodus Clouddaten über einen Feldbus zu einem Cloudserver übermittelt;
Figur 4 eine Übertragung von Clouddaten vom Feldgerät zu einer Anbindungsvorrichtung, welche die Clouddaten an eine private Cloud weiterleitet;
Figur 5a eine Übertragung von Clouddaten an eine Public Cloud, wobei zur Datenübertragung an die Public Cloud ein erster Protokollstack des Feldauswählbar ist; und
Figur 5b eine Übertragung von Clouddaten an eine private Cloud, wobei zur Datenübertragung an die private Cloud ein zweiter Protokollstack des Feldgeräts auswählbar ist.

Bei Feldgeräten der Automatisierungstechnik besteht in zunehmendem Maß die Anforderung, Daten vom Feldgerät aus in eine Cloud zu übermitteln und dort zu speichern. Bei den abzuspeichernden Daten kann es beispielsweise um Parameterwerte und Konfigurationsdaten des Feldgeräts, um erfasste Messwerte, um Daten zum Gerätezustand, um Diagnosedaten oder um Ergebnisse einer Datenauswertung handeln. Derartige Daten können vom Feldgerät aus über eine Datenverbindung, beispielsweise eine drahtlose Datenverbindung, in eine Public Cloud geschrieben werden. Viele Firmen bevorzugen jedoch, die in den Feldgeräten anfallenden Daten in einem firmeneigenen Cloudserver oder in einer privaten Cloud zu speichern, um auf diese Weise unter Aspekten der Datensicherheit eine verbesserte Kontrolle der Daten zu behalten.

Angesichts dieser Kundenanforderungen sollten Feldgeräte so konfigurierbar sein, dass die im Feldgerät anfallenden Clouddaten wahlweise entweder an eine Public Cloud oder an eine private Cloud übermittelt werden können. Um den Konfigurationsaufwand zu verringern, wird vorgeschlagen, im Feldgerät oder am Feldgerät ein Einstellelement vorzusehen, das zumindest zwei Einstellmöglichkeiten aufweist, wobei mittels dieses Einstellelements ausgewählt werden kann, ob die Clouddaten zu einer Public Cloud oder zu einer private Cloud übermittelt werden sollen. Dabei kann das Einstellelement beispielsweise als hardwareimplementiertes Schalt- oder Konfigurationselement ausgebildet sein, beispielsweise als Dual-In-Line-Schalter oder auch als Steckbrücke beziehungsweise Jumper. Im Folgenden sollen die Einstellmöglichkeiten des Einstellelements mit "true" und "false" bezeichnet werden, wobei das Einstellelement zusätzlich zu diesen beiden Einstellmöglichkeiten noch weitere Einstellmöglichkeiten aufweisen kann. Das Feldgerät ist dazu ausgelegt, bei der Einstellung "true" die anfallenden Clouddaten in eine Public Cloud zu übertragen und bei der Einstellung "false" die Clouddaten zur privaten Cloud zu übermitteln.

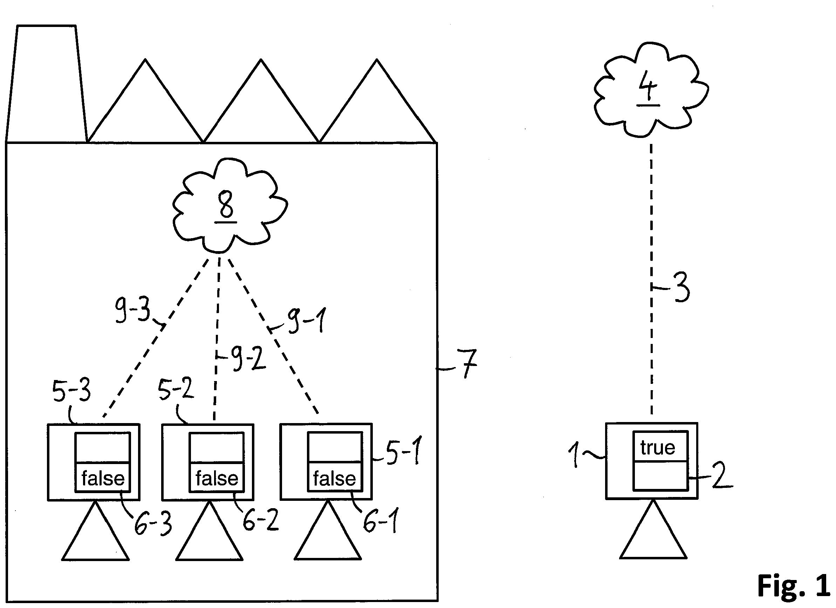

In Figur 1 ist die Funktionsweise eines Feldgeräts, das mit einem Einstellelement zur Konfiguration der Datenübertragung in eine Cloud ausgestattet ist, dargestellt. Auf der rechten Seite von Figur 1 ist ein Feldgerät 1 mit einem hardwareimplementierten Einstellelement 2 gezeigt, wobei die Einstellung "true" ausgewählt ist. Das Feldgerät 1 ist dazu ausgelegt, bei dieser Einstellung des hardwareimplementierten Einstellelements 2 die für die Cloud bestimmten Daten gemäß einem ersten Datenübertragungsmodus über eine Datenverbindung 3 an eine Public Cloud 4 zu übermitteln. Bei der Datenverbindung 3 kann es sich beispielsweise um eine drahtlose Datenverbindung handeln, beispielsweise um eine WLAN-Verbindung oder eine Mobilfunkverbindung. Die Public Cloud 4 kann vom Feldgerät 1 aus über eine fest vorgegebene Domain wie beispielsweise "endresscloud.com" adressiert werden, wobei diese für die Datenübertragung zur Public Cloud 4 vorgesehene Domain auf Seiten des Feldgeräts 1 gespeichert ist.

Auf der linken Seite von Figur 1 sind drei Feldgeräte 5-1, 5-2 und 5-3 gezeigt, die jeweils mit hardwareimplementierten Einstellelementen 6-1, 6-2 und 6-3 ausgestattet sind. Bei den drei gezeigten Feldgeräten 5-1, 5-2, 5-3 kann es sich beispielsweise um Feldgeräte eines Automatisierungsnetzwerks innerhalb eines Betriebs 7 handeln. Mittels der hardwareimplementierten Einstellelemente 6-1, 6-2 und 6-3 kann für jedes der Feldgeräte der Datenübertragungsmodus in eine Cloud ausgewählt werden. Bei dem gezeigten Beispiel ist an den drei Einstellelementen 6-1, 6-2, 6-3 jeweils die Einstellung "false" ausgewählt. Bei der Einstellung "false" sind die Feldgeräte 5-1, 5-2 und 5-3 für eine Datenübertragung der Clouddaten in eine private Cloud 8 konfiguriert. Die Feldgeräte 5-1, 5-2, 5-3 sind dazu ausgelegt, bei der Einstellung "false" der Einstellelemente 6-1, 6-2, 6-3 die anfallenden Clouddaten über Datenverbindungen 9-1, 9-2, 9-3 in die private Cloud 8 zu übertragen. Bei den Datenverbindungen 9-1, 9-2 und 9-3 kann es sich beispielsweise um speziell für die Datenübertragung zur privaten Cloud 8 vorgesehene Datenverbindungen handeln, beispielsweise um drahtlose Datenverbindungen. Alternativ dazu können die Clouddaten von den Feldgeräten 5-1, 5-2, 5-3 aus beispielsweise über ein Feldbusnetzwerk zu einem Anbindungsgerät oder einem Cloudserver übertragen werden, sodass die Datenverbindungen 9-1, 9-2, 9-3 in Form von Feldbusverbindungen realisiert sein können. Die private Cloud 8 kann dabei über eine lokale Domain adressiert werden, die innerhalb des Betriebs 7 verwendet wird, beispielsweise über die lokale Domain "beispielfirma.de". Die private Cloud 8 könnte dann beispielsweise über den Domainnamen "endresscloud.beispielfirma.de" angesprochen werden. Vorzugsweise wird der für die Adressierung der privaten Cloud 8 benötigte lokale Domainname auf Seiten der Feldgeräte 5-1, 5-2 und 5-3 gemäß einem vorbestimmten Bildungsschema erzeugt.

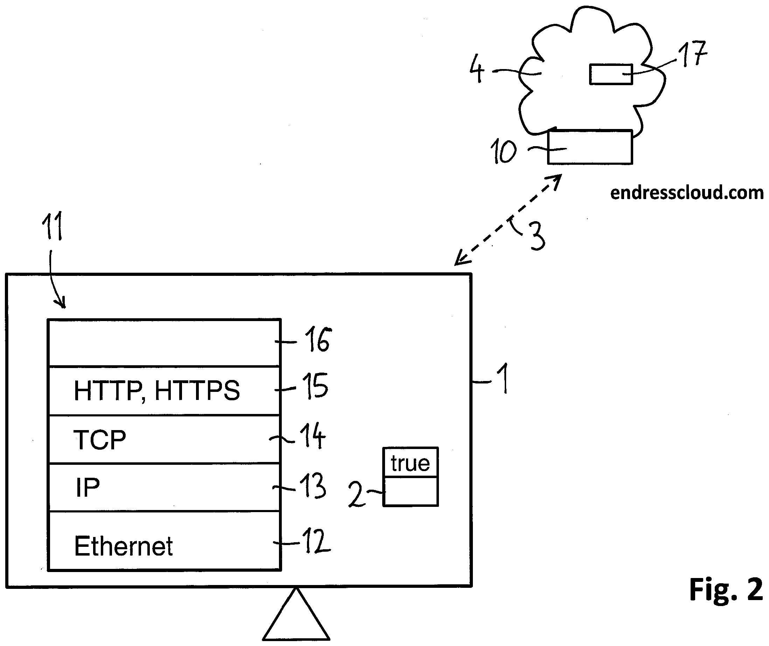

In Figur 2 ist das Feldgerät 1 nochmals vergrößert gezeigt. Das hardwareimplementierte Einstellelement 2 ist auf den Wert "true" gesetzt. Durch die Einstellung "true" des Einstellelements 2 wird der Datenübertragungsmodus des Feldgeräts 1 für die in die Cloud zu schreibenden Daten so eingestellt, dass die zu übertragenden Daten vom Feldgerät 1 aus zur Public Cloud 4 übertragen werden. Dabei erfolgt der Zugriff auf die Datenbankoperationen der Public Cloud 4 über eine Programmierschnittstelle 10 der Cloud 4, welche auch als "Cloud Server API" bezeichnet wird. Über die Programmierschnittstelle 10 der Public Cloud 4 kann auf die von der Public Cloud 4 bereitgestellten Datenbankdienste zugegriffen werden. Dabei kann auf die von der Public Cloud 4 bereitgestellten Datenbankdienste insbesondere mittels der als CRUD-Operationen bekannten Datenbankoperationen zugegriffen werden, wobei das Akronym "CRUD" für "Create, Read, Update, Delete" steht. Die CRUD-Operationen umfassen das Anlegen ("Create") eines Eintrags in der Public Cloud 4, das Auslesen ("Read") eines Eintrags, das Aktualisieren ("Update") eines Eintrags sowie das Löschen ("Delete") eines Eintrags in der Public Cloud 4. Darüber hinaus können die Clouddienste aber auch andere anders strukturierte oder zusätzliche Clouddienste umfassen.

Zur Erzeugung von an die Public Cloud 4 gerichteten Aufrufen von Datenbankdiensten ist auf dem Feldgerät 1 ein Protokollstack 11 vorgesehen, vorzugsweise ein HTTPbeziehungsweise HTTPS-Protokollstack. Der Protokollstack 11 umfasst eine Ethernet-Schicht 12, eine IP-Schicht 13, eine TCP-Schicht 14 sowie eine HTTP- oder HTTPS-Schicht 15. Oberhalb der HTTP- beziehungsweise HTTPS-Schicht 15 ist eine anwendungsspezifische Schicht 16 implementiert, die zum Aufrufen der Clouddienste vorgesehen ist. In dieser anwendungsspezifischen Schicht 16 sind die bereits erwähnten CRUD-Operationen, also die für das Ansprechen der Clouddienste benötigten Datenbankoperationen definiert. Mittels der CRUD-Operationen können Einträge in der Public Cloud 4 angelegt, ausgelesen, modifiziert und gelöscht werden. Vorzugsweise werden für die CRUD-Operationen in der anwendungsspezifischen Schicht 16 HTTP-eigene Befehle wie GET und POST weiterverwendet. Darüber hinaus sind in der anwendungsspezifischen Schicht 16 Datenobjekte definiert, die beim Zugriff auf Einträge der Public Cloud 4 benötigt werden, insbesondere beispielsweise Datenobjekte zu Assets, Herstellern und Gerätetypen sowie Verknüpfungen zwischen diesen Datenobjekten. Neben den grundlegenden Datenbankoperationen und den Datenobjekten kann in der anwendungsspezifischen Schicht mindestens ein Ablaufschema spezifiziert sein, das eine Abfolge von Operationen angibt, die beim Zugriff auf Clouddienste eingehalten werden muss. So kann beispielsweise vorgesehen sein, dass vor dem Anlegen eines neuen Eintrags zu einer Feldbuskomponente geprüft werden muss, ob es zu dieser Feldbuskomponente bereits einen Eintrag in der Public Cloud 4 gibt. Erst wenn entsprechend diesem Ablaufschema geprüft wurde, dass ein derartiger Eintrag noch nicht existiert, kann im nächsten Schritt der gewünschte Eintrag angelegt werden.

Wenn das Einstellelement 2 auf den Wert "true" gesetzt ist, wird der vom Protokollstack 11 erzeugte Aufruf einer Datenbankoperation an den Domainnamen der Public Cloud 4 adressiert, wobei dieser Domainname der Public Cloud 4 beispielsweise vom Hersteller des Feldgeräts 1 festgelegt und im Feldgerät 1 abgespeichert sein kann. Bei Feldgeräten der Firma Endress + Hauser wird beispielsweise "endresscloud.com" als Domainname der Public Cloud 4 verwendet. Die vom Protokollstack 11 erzeugten Aufrufe vom Datenbankdiensten werden an den Domainnamen "endresscloud.com" der Public Cloud 4 adressiert, über die Datenverbindung 3 zur Programmierschnittstelle 10 der Public Cloud 4 übermittelt und auf Seiten der Public Cloud 4 weiterverarbeitet. Dabei wird der Domainname "endresscloud.com" mittels eines Nameservers beziehungsweise DNS-Servers in die IP-Adresse 17 der Public Cloud 4 umgewandelt.

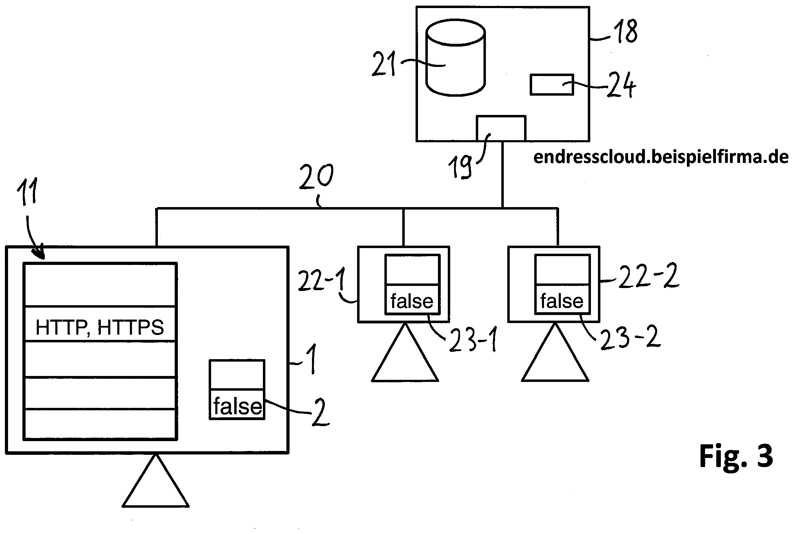

In Figur 3 ist das Feldgerät 1 nochmals gezeigt, wobei das Einstellelement 2 jetzt jedoch auf den Wert "false" gesetzt ist. Dadurch wird für die an die Cloud zu übertragenden Daten ein Datenübertragungsmodus festgelegt, gemäß dem diese Daten an eine private Cloud zu übermitteln sind. Die Aufrufe von Datenbankoperationen der privaten Cloud werden wieder mit dem Protokollstack 11 erzeugt, der bereits in Figur 2 beschrieben worden war. Insofern werden bei den in den Figuren 2 und 3 gezeigten Beispielen die Aufrufe der Public Cloud 4 und der privaten Cloud mit ein und demselben Protokollstack 11 erzeugt, der vorzugsweise als HTTP- beziehungsweise HTTPS-Protokollstack ausgebildet sein kann. Alternativ dazu können für Aufrufe der Public Cloud und für Aufrufe der privaten Cloud auch unterschiedliche Protokollstacks vorgesehen sein, was im Folgenden noch beschrieben wird.

Ein vom Feldgerät 1 erzeugter Datenbankaufruf wird über eine Datenverbindung zu einem Cloudserver 18 übermittelt, wobei die Datenübertragung bei dem in Figur 3 gezeigten Beispiel über einen Feldbus 20 erfolgt. Über die Programmierschnittstelle 19 des Cloudservers 18 können die verschiedenen Datenbankdienste aufgerufen werden. Auf dem Cloudserver 18 ist zum Speichern der Cloudeinträge mindestens ein Datenspeicher 21 vorgesehen.

Bei dem in Figur 3 gezeigten Beispiel erfolgt die Datenübertragung zwischen dem Feldgerät 1 und dem Cloudserver 18 über den Feldbus 20, an den sowohl das Feldgerät 1 als auch der Cloudserver 18 angeschlossen sind. Darüber hinaus können an den Feldbus 20 weitere Feldgeräte 22-1, 22-2 angeschlossen sein. Bei dem in Figur 3 gezeigten Beispiel sind diese Feldgeräte 22-1, 22-2 ebenfalls jeweils mit einem Einstellelement 23-1, 23-2 zur Auswahl des Datenübertragungsmodus ausgestattet. Diese Einstellelemente 23-1, 23-2 sind jeweils auf den Wert "false" gesetzt, sodass sowohl das Feldgerät 22-1 als auch das Feldgerät 22-2 die anfallenden Clouddaten an den Cloudserver 18 und somit an die private Cloud übermitteln. Innerhalb des jeweiligen Netzwerks, im Fall von Figur 3 also innerhalb des Feldbusnetzwerks, ist dem Cloudserver 18 ein Cloudname der privaten Cloud zugeordnet, mit dem der Cloudserver 18 innerhalb der lokalen Domain angesprochen werden kann. Gemäß einer ersten Möglichkeit könnte dieser Cloudname des Cloudservers 18 beliebig gewählt werden. In diesem Fall wäre es jedoch notwendig, diesen Cloudnamen vorab in jedes der Feldgeräte 1, 22-1 und 22-2 einzuspeichern, damit diese Feldgeräte Aufrufe von Clouddiensten an den Cloudserver 18 senden können.

Vorteilhafter ist es jedoch, den Cloudnamen, mit dem der Cloudserver 18 innerhalb der lokalen Domain adressierbar ist, mittels eines vorher festgelegten Bildungsschemas zu erzeugen. Innerhalb der lokalen Domain "beispielfirma.de" könnte der Cloudserver 18 beispielsweise den Cloudnamen "endresscloud.beispielfirma.de" erhalten, der aus dem Namensbestandteil "endresscloud", einem als Trennzeichen verwendenden Punkt und der lokalen Domain "beispielfirma.de" zusammengesetzt ist. Dieser Cloudname wird von jedem der Feldgeräte 1, 22-1 und 22-2 zum Aufrufen von Clouddiensten verwendet. Wegen des vorgegebenen Bildungsschemas des Cloudnamens "endresscloud.beispielfirma.de" kann dieser Cloudname von jedem der Feldgeräte 1, 22-1 und 22-2 auf einfache Weise hergeleitet werden, sodass es nicht notwendig ist, diesen Cloudnamen vorab in jedem der Feldgeräte abzuspeichern. Wenn sich ein Feldgerät in dem jeweiligen lokalen Netzwerk anmeldet, beispielsweise in einem Industrial Ethernet-Netzwerk, dann wird dem Feldgerät von dem DHCP-Sever des Netzwerks eine IP-Adresse zugewiesen. In dieser DHCP-Zuweisung wird dem Feldgerät auch die lokale Domain mitgeteilt, in der es angemeldet ist, also beispielsweise die lokale Domain "beispielfirma.de". Auf Seiten des Feldgeräts kann dann basierend auf dieser lokalen Domain der Cloudname des Cloudservers 18 dynamisch erzeugt werden. Hierzu wird ein vorgegebener Namensbestandteil wie beispielsweise "endresscloud" über einen Trennpunkt mit der lokalen Domain "beispielfirma.de" verbunden, um auf dieser Weise den Cloudnamen "endresscloud.beispielfirma.de" zu erzeugen. Der Namensbestandteil "endresscloud" kann beispielsweise aus dem Cloudnamen der Public Cloud "endresscloud.com" durch Weglassen von ".com" abgeleitet werden. Das jeweilige Feldgerät 1, 22-1, 22-2 kann den so erzeugten Cloudnamen "endresscloud.beispielfirma.de" dazu verwenden, Clouddienste des Cloudservers 18 aufzurufen. Im Rahmen diese Adressierung wird der Cloudname der privaten Cloud dann mittels eines DNS-Servers in die IP-Adresse 24 des Cloudserves 18 umgewandelt.

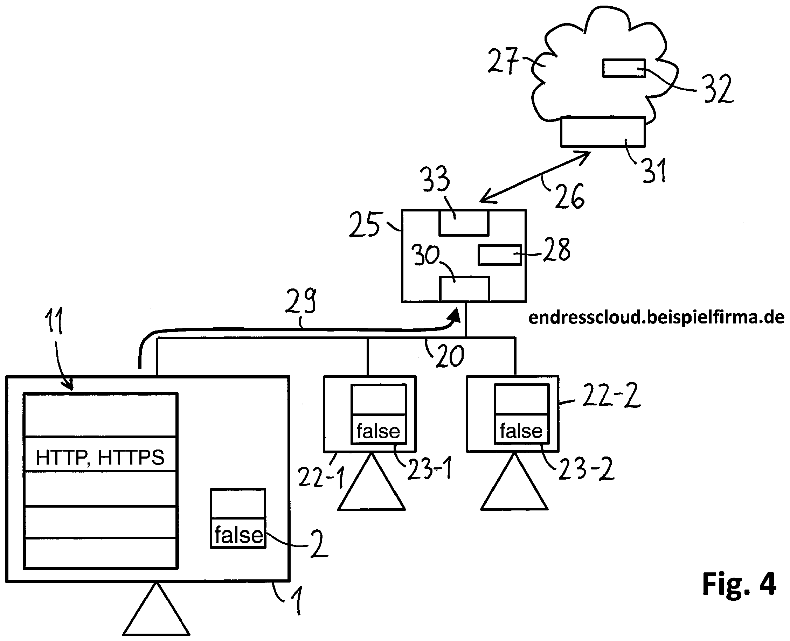

Bei der in Figur 3 gezeigten Lösung ist auf Seiten des Cloudservers 18 ein Datenspeicher 21 zum Speichern der Cloudeinträge vorgesehen. In Figur 4 ist ein weiteres Ausführungsbeispiel gezeigt, bei dem an den Feldbus 20 eine Anbindungsvorrichtung 25 angeschlossen ist, die dazu ausgelegt ist, von einem Feldgerät empfangene Clouddaten über eine Datenverbindung 26 an eine private Cloud 27 weiterzuleiten. An den Feldbus 20 sind wie bei der in Figur 3 gezeigten Lösung mehrere Feldgeräte 1, 22-1 und 22-2 angeschlossen, die jeweils ein hardwareimplementiertes Einstellelement 2, 23-1, 23-2 aufweisen. Diese Einstellelemente 2, 23-1, 23-2 sind jeweils auf den Wert "false" gesetzt, sodass für alle angeschlossenen Feldgeräte ein Datenübertragungsmodus zur privaten Cloud und somit zum Anbindungsgerät 25 ausgewählt ist. Zum Erzeugen von Aufrufen von Clouddiensten ist auf jedem der Feldgeräte 1, 22-1 und 22-2 ein Protokollstack 11 vorgesehen, der vorzugsweise als HTTP- beziehungsweise HTTPS-Protokollstack ausgebildet ist. Beispielsweise kann das Feldgerät 1 einen Aufruf eines Clouddienstes erzeugen, der an den Cloudnamen "endresscloud.beispielfirma.de" der privaten Cloud adressiert wird. Dieser Domainname wird durch den zuständigen DNS-Server in die IP-Adresse 28 der Anbindungsvorrichtung 25 umgewandelt, sodass der Aufruf des Clouddiensts gemäß dem Pfeil 29 vom Feldgerät 1 zur Anbindungsvorrichtung 25 übermittelt wird und dort von der Programmierschnittstelle 30 empfangen wird. Bei der Programmierschnittstelle 30 kann es sich beispielsweise um eine lokale Kopie der Programmierschnittstelle 31 der privaten Cloud 27 handeln. Über die Programmierschnittstelle 30 können die Clouddienste der privaten Cloud 27 in derselben Weise angesprochen werden wie über die eigentliche Programmierschnittstelle 31 der privaten Cloud 27. Insbesondere kann die Schnittstellendefinition der Programmierschnittstelle 30 mit der Schnittstellendefinition der Programmierschnittstelle 31 übereinstimmen. Alternativ dazu könnte die Programmierschnittstelle 30 der Anbindungsvorrichtung 25 jedoch auch abweichend von der Programmierschnittstelle 31 der privaten Cloud 27 ausgebildet sein.

Die Anbindungsvorrichtung 25 ist dazu ausgebildet, von einem Feldgerät Aufrufe vom Clouddiensten zu empfangen und an die private Cloud 27 weiterzuleiten. Hierzu wird die IP-Adresse 28 eines empfangenen Aufrufs eines Clouddiensts durch die IP-Adresse 32 der privaten Cloud 27 ersetzt, wobei der Aufruf von der Cloud-Client-Schnittstelle 33 der Anbindungsvorrichtung 25 aus über die Datenverbindung 26 zur Programmierschnittstelle 31 der privaten Cloud 27 übermittelt wird. In umgekehrter Richtung können Nachrichten und Bestätigungen der privaten Cloud 27 über die Programmierschnittstelle 31, die Datenverbindung 26 und die Cloud-Client-Schnittstelle 33 zur Anbindungsvorrichtung 25 und von dort über den Feldbus 20 zu einem der Feldgeräte übertragen werden.

Anhand von Figur 4 ist erkennbar, dass die Datenübertragung zu einer privaten Cloud 27 auch über eine hierfür vorgesehene Anbindungsvorrichtung 25 abgewickelt werden kann, die die Daten von einem Feldgerät empfängt und an die private Cloud 27 weiterleitet.

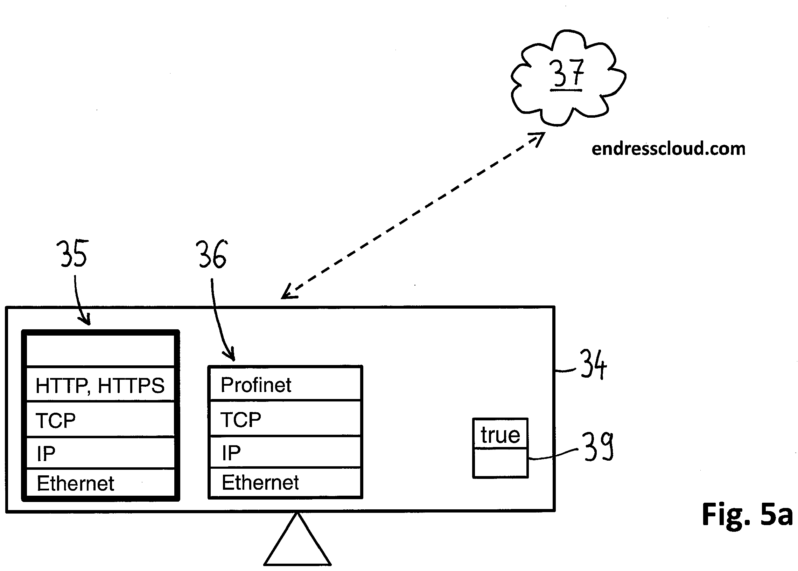

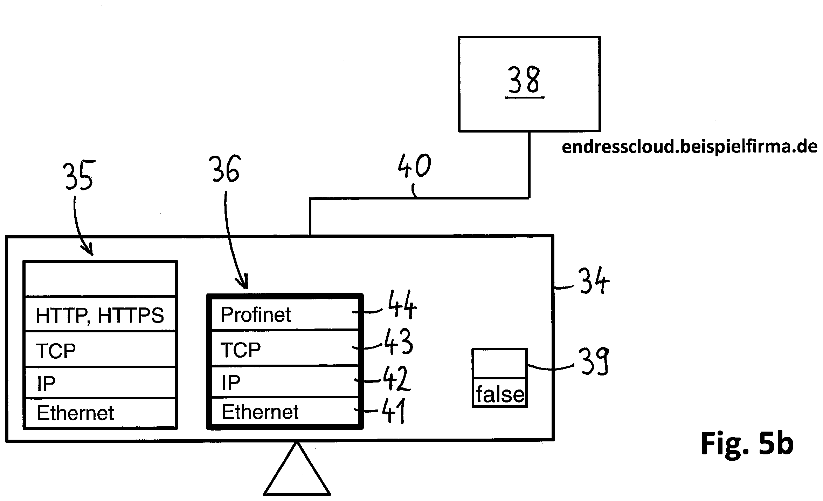

Bei den bisher diskutierten Beispielen war für die Datenübertragungen zur Public Cloud und zur privaten Cloud jeweils derselbe Protokollstack 11 eingesetzt worden. In den Figuren 5a und 5b ist dagegen ein weiteres Ausführungsbeispiel gezeigt, bei dem auf Seiten eines Feldgeräts 34 ein erster Protokollstack 35 sowie ein zweiter Protokollstack 36 implementiert sind. Dabei wird der erste Protokollstack 35, der vorzugweise als HTTP- beziehungsweise HTTPS-Protokollstack ausgebildet ist, für die Übertragung von Clouddaten zur Public Cloud 37 verwendet. Der zweite Protokollstack 36 dagegen, der vorzugsweise als Industrial-Ethernet-Protokollstack ausgebildet sein kann, wird bei der Übertragung von Clouddaten an die private Cloud 38 verwendet, die in Figur 5b gezeigt ist.

Auf Seiten des Feldgeräts 34 ist ein hardwareimplementiertes Einstellelement 39 vorgesehen, mit dem zwischen einer Datenübertragung an die Public Cloud 37 und einer Datenübertragung an die private Cloud 38 umgeschaltet werden kann. In Figur 5a ist das hardwareimplementierte Einstellelement 39 auf den Wert "true" gesetzt, sodass die Datenübertragung zur Public Cloud 37 ausgewählt ist. Durch diese Einstellung des Einstellelements 39 wird festgelegt, dass die Clouddaten an den Domainnamen "endresscloud.com" der Public Cloud 37 gesendet werden. Zusätzlich wird durch den Wert "true" des Einstellelements 39 aber auch der erste Protokollstack 35 als für die Datenübertragung zu Public Cloud 37 zu verwendender Protokollstack ausgewählt. Bei dem Protokollstack 35 handelt es sich vorzugweise um einen HTTP- beziehungsweise HTTPS-Protokollstack, sodass die Datenbankaufrufe vorzugsweise im Standard HTTP beziehungsweise HTTPS zur Public Cloud 37 übertragen werden. Dabei entsprechen die Protokollschichten des ersten Protokollstacks 35, sofern dieser als HTTP- beziehungsweise HTTPS-Protokollstack ausgelegt ist, den Protokollschichten des in Figur 2 gezeigten Protokollstacks 11.

In Figur 5b ist das Feldgerät 34 noch einmal dargestellt, wobei das Einstellelement 39 jetzt auf den Wert "false" gesetzt ist. Somit ist in Figur 5b der zweite Datenübertragungsmodus ausgewählt, bei dem die Clouddaten von Feldgerät 34 in die private Cloud 38 übertragen werden. Dabei kann die Datenverbindung zwischen dem Feldgerät 34 und der privaten Cloud 38 beispielsweise über einen Feldbus 40 erfolgen. Alternativ dazu könnte jedoch eine gesonderte Datenverbindung, beispielsweise eine drahtlose Datenverbindung, zwischen dem Feldgerät 34 und der privaten Cloud 38 vorgesehen sein. Wenn das Einstellelement 39 auf den Wert "false" gesetzt ist, wird dadurch der Cloudname "endresscloud.beispielfirma.de" als Adresse ausgewählt. Zusätzlich wird bei dem in Figur 5b gezeigten Beispiele durch die Einstellung des Einstellelements 39 auf den Wert "false" für die Datenübermittelung an die private Cloud 38 der zweite Protokollstack 36 ausgewählt, wobei der zweite Protokollstack 36 sich vom ersten Protokollstacks 35 unterscheidet. Für die Übertragung der Clouddaten über den Feldbus 40 kann der zweite Protokollstack 38 beispielsweise als Feldbus-Protokollstack implementiert sein, beispielsweise als Industrial-Ethernet-Protokollstack. Bei dem in Figur 5b gezeigten Beispiel ist der zweite Protokollstack 36 als Profinet-Protokollstack ausgebildet und umfasst eine Ethernet-Schicht 41, eine IP-Schicht 42, eine TCP-Schicht 43 und eine darüber angeordnete Profinet-Schicht 44. Durch die Auswahl des zweiten Protokolls 36 können die in die private Cloud 38 zu übertragenden Clouddaten über den Feldbus 40 zur privaten Cloud 38 übertragen werden. Bei der in den Figuren 5a und 5b gezeigten Lösung wird über die Einstellung des hardwareimplementierten Einstellelements 39 also nicht nur die Adressierung umgestellt, sondern zusätzlich auch der jeweils passende der beiden Protokollstacks 35 oder 36 ausgewählt, der dann für die Übertragung der Clouddaten zur jeweiligen Cloud eingesetzt wird.

## Patentansprüche

1. Eine Feldbuskomponente (1, 34), **dadurch gekennzeichnet, dass**
die Feldbuskomponente (1, 34) dazu ausgelegt ist, an eine Cloud zu übertragende Daten entweder in einem ersten Datenübertragungsmodus in eine Public Cloud (4, 37) oder in einem zweiten Datenübertragungsmodus in eine private Cloud (8, 27, 38) zu übertragen, wobei die Feldbuskomponente (1, 34) ein Einstellelement (2, 39) umfasst, das wahlweise in eine erste Einstellung oder in eine zweite Einstellung bringbar ist,
wobei die Feldbuskomponente (1, 34) dazu ausgelegt ist, falls sich das Einstellelement (2, 39) in der ersten Einstellung befindet, an eine Cloud zu übertragende Daten entsprechend dem ersten Datenübertragungsmodus in die Public Cloud (4, 37) zu übertragen und, falls sich das Einstellelement (2, 39) in der zweiten Einstellung befindet, an eine Cloud zu übertragende Daten entsprechend dem zweiten Datenübertragungsmodus in die private Cloud (8, 27, 38) zu übertragen.

2. Feldbuskomponente nach Anspruch 1, **dadurch gekennzeichnet, dass** das Einstellelement mindestens eines von folgenden umfasst: ein Schaltelement, einen Umschalter, ein Umschaltelement, einen Dual-In-Line Schalter, ein Konfigurationselement, ein Steckelement, einen Stecker, einen Jumper, eine Steckbrücke, einen Kurzschlussstecker.

3. Feldbuskomponente nach Anspruch 1 oder Anspruch 2, **gekennzeichnet durch** mindestens eines von folgenden:
- bei dem Einstellelement handelt es sich um ein in Hardware realisiertes Einstellelement;
- das Einstellelement ist durch mechanische Betätigung wahlweise in die erste Einstellung oder in die zweite Einstellung überführbar;
- das Einstellelement ist auf einer Platine der Feldbuskomponente angeordnet oder anordenbar;
- bei dem Einstellelement handelt es sich um ein Steckelement, das auf Stifte einer Platine der Feldbuskomponente aufsteckbar ist.

4. Feldbuskomponente nach einem der Ansprüche 1 bis 3, **gekennzeichnet durch** mindestens eines von folgenden:
- die Feldbuskomponente ist dazu ausgelegt, im ersten Datenübertragungsmodus die Daten an einen Domainnamen der Public Cloud zu übertragen;
- die Feldbuskomponente ist dazu ausgelegt, im zweiten Datenübertragungsmodus die Daten an einen Domainnamen der privaten Cloud zu übertragen;
- der Domainname der Public Cloud ist mittels eines Nameservers in eine IP-Adresse der Public Cloud übersetzbar und die Feldbuskomponente ist dazu ausgelegt, die Daten an die IP-Adresse der Public Cloud zu übertragen;
- der Domainname der privaten Cloud ist mittels eines Nameservers in eine IP-Adresse der privaten Cloud übersetzbar und die Feldbuskomponente ist dazu ausgelegt, die Daten an die IP-Adresse der privaten Cloud zu übertragen;
- bei der IP-Adresse der privaten Cloud handelt es sich um die IP-Adresse eines Anbindungsgeräts oder eines Cloudservers;
- die Feldbuskomponente ist dazu ausgelegt, im ersten Datenübertragungsmodus die Daten an eine IP-Adresse einer Public Cloud zu übertragen;
- die Feldbuskomponente ist dazu ausgelegt, im zweiten Datenübertragungsmodus die Daten an eine IP-Adresse einer privaten Cloud zu übertragen.

5. Feldbuskomponente nach einem der Ansprüche 1 bis 4, **dadurch gekennzeichnet, dass** die Feldbuskomponente einen ersten Protokollstack umfasst, wobei die Feldbuskomponente dazu ausgelegt ist, im ersten Datenübertragungsmodus für die Übertragung von Daten an die Public Cloud den ersten Protokollstack zu verwenden, und wobei die Feldbuskomponente dazu ausgelegt ist, im zweiten Datenübertragungsmodus für die Übertragung von Daten an die private Cloud ebenfalls den ersten Protokollstack zu verwenden.

6. Feldbuskomponente nach Anspruch 5, **dadurch gekennzeichnet, dass** es sich bei dem ersten Protokollstack um einen HTTP- oder HTTPS-Protokollstack handelt.

7. Feldbuskomponente nach einem der Ansprüche 1 bis 4, **dadurch gekennzeichnet, dass** die Feldbuskomponente einen ersten Protokollstack und einen zweiten Protokollstack umfasst, wobei die Feldbuskomponente dazu ausgelegt ist, im ersten Datenübertragungsmodus für die Übertragung von Daten an die Public Cloud den ersten Protokollstack zu verwenden und im zweiten Datenübertragungsmodus für die Übertragung von Daten an die private Cloud den zweiten Protokollstack zu verwenden.

8. Feldbuskomponente nach einem der Ansprüche 1 bis 4 oder Anspruch 7, **dadurch gekennzeichnet, dass** die Feldbuskomponente dazu ausgelegt ist, beim Umstellen zwischen dem ersten Datenübertragungsmodus und dem zweiten Datenübertragungsmodus zwischen einem ersten Protokollstack und einem zweiten Protokollstack umzuschalten.

9. Feldbuskomponente nach Anspruch 7 oder Anspruch 8, **dadurch gekennzeichnet, dass** es sich bei dem ersten Protokollstack um einen HTTP- oder HTTPS-Protokollstack handelt und dass es sich bei dem zweiten Protokollstack um einen Industrial-Ethernet-Protokollstack handelt.

10. Feldbuskomponente nach einem der Ansprüche 1 bis 9, **dadurch gekennzeichnet, dass** die Feldbuskomponente dazu ausgelegt ist, im ersten Datenübertragungsmodus für die Adressierung der Public Cloud einen vorgegebenen Domainnamen zu verwenden.

11. Feldbuskomponente nach einem der Ansprüche 1 bis 10, **gekennzeichnet durch** mindestens eines von folgenden:
- die Feldbuskomponente ist dazu ausgelegt, für die Adressierung der privaten Cloud einen Domainnamen der privaten Cloud zu erzeugen;
- die Feldbuskomponente ist dazu ausgelegt, zur Adressierung der privaten Cloud einen Domainnamen der privaten Cloud gemäß einem vorgegebenen Bildungsschema zu erzeugen;
- die Feldbuskomponente ist dazu ausgelegt, zur Adressierung der privaten Cloud einen Domainnamen der privaten Cloud gemäß einem vorgegebenen Bildungsschema zu erzeugen, wobei die Feldbuskomponente dazu ausgelegt ist, den Domainnamen der privaten Cloud ausgehend von einer lokalen Domain, in der die Feldbuskomponente sich befindet, zu bilden;
- die Feldbuskomponente ist dazu ausgelegt, zur Adressierung der privaten Cloud einen Domainnamen der privaten Cloud zu erzeugen, wobei die Feldbuskomponente dazu ausgelegt ist, den Domainnamen der privaten Cloud aus einem vorgegebenen Namensbestandteil und einer lokalen Domain, in der die Feldbuskomponente sich befindet, zusammenzusetzen;
- die Feldbuskomponente ist dazu ausgelegt, eine lokale Domain anhand einer von einem DHCP-Server empfangenen DHCP-Zuweisung zu ermitteln und die so ermittelte lokale Domain als Basis für die Erzeugung eines Domainnamens der privaten Cloud zu verwenden;
- die Feldbuskomponente weist eine Feldbusschnittstelle zum Anschluss an einen Feldbus auf;
- die Feldbuskomponente weist eine Feldbusschnittstelle zur Verbindung mit einem Feldbus auf und ist dazu ausgelegt, die im zweiten Datenübertragungsmodus zur privaten Cloud zu übertragenden Daten über den Feldbus zu übertragen;
- bei dem Feldbus handelt es sich um einen Feldbus gemäß einem Industrial-Ethernet-Standard;
- bei dem Feldbus handelt es sich um einen Feldbus gemäß einem der folgenden Standards: EtherNet/IP, Profinet, EtherCAT, Modbus TCP, HART-IP, OPC, OPC-UA;
- bei der Feldbuskomponente handelt es sich um eines von folgenden: ein Feldgerät, ein Gatewaygerät, eine sonstige Komponente eines Feldbusnetzwerks.

12. Ein Feldbusnetzwerk, welches aufweist
einen Feldbus (20. 40),
eine an den Feldbus (20, 40) angeschlossene Feldbuskomponente (1, 34) gemäß einem der Ansprüche 1 bis 12,
ein an den Feldbus (20, 40) angeschlossenes Anbindungsgerät (25) oder einen an den Feldbus (20, 40) angeschlossenen Cloudserver (18).

13. Feldbusnetzwerk nach Anspruch 12, **gekennzeichnet durch** mindestens eines von folgenden:
- das Feldbusnetzwerk umfasst eine an den Feldbus angeschlossene Anbindungsvorrichtung, wobei die Feldbuskomponente dazu ausgelegt ist, im zweiten Übertragungsmodus an die Cloud zu übertragende Daten über den Feldbus an die Anbindungsvorrichtung zu übertragen;
- das Feldbusnetzwerk umfasst eine an den Feldbus angeschlossene Anbindungsvorrichtung, wobei die Anbindungsvorrichtung dazu ausgelegt ist, von der Feldbuskomponente empfangene Daten an die private Cloud weiterzuleiten.

14. Feldbusnetzwerk nach Anspruch 12, **gekennzeichnet durch** mindestens eines von folgenden:
- das Feldbusnetzwerk umfasst einen an den Feldbus angeschlossenen Cloudserver, wobei die Feldbuskomponente dazu ausgelegt ist, im zweiten Übertragungsmodus an die Cloud zu übertragende Daten über den Feldbus an den Cloudserver zu übertragen.
- das Feldbusnetzwerk umfasst einen an den Feldbus angeschlossenen Cloudserver, wobei der Cloudserver eine Speichervorrichtung zum Speichern der von der Feldbuskomponente empfangenen Daten umfasst.

15. Verfahren zum Übertragen von Daten von einer Feldbuskomponente (1, 34) in eine Cloud, wobei die Feldbuskomponente (1, 34) dazu ausgelegt ist, an eine Cloud zu übertragende Daten entweder in einem ersten Datenübertragungsmodus in eine Public Cloud (4, 37) oder in einem zweiten Datenübertragungsmodus in eine private Cloud (8, 27, 38) zu übertragen,
wobei die Feldbuskomponente (1, 34) ein Einstellelement (2, 39) umfasst, das wahlweise in eine erste Einstellung oder in eine zweite Einstellung bringbar ist,
wobei das Verfahren aufweist
Überführen des Einstellelements (2, 39) der Feldbuskomponente (1, 34) in eine erste Einstellung oder in eine zweite Einstellung;
Übermitteln der in eine Cloud zu übertragenden Daten in die Public Cloud (4, 37), falls sich das Einstellelement (2, 39) in der ersten Einstellung befindet, oder Übermitteln der in eine Cloud zu übertragenden Daten in die private Cloud (8, 27, 38), falls sich das Einstellelement (2, 39) in der zweiten Einstellung befindet.

## Claims

1. A fieldbus component (1, 34), **characterized in that**
the fieldbus component (1, 34) is designed to transmit data that are to be transmitted to a cloud either to a public cloud (4, 37) in a first data transmission mode or to a private cloud (8, 27, 38) in a second data transmission mode, wherein the fieldbus component (1, 34) comprises an adjustment element (2, 39) which can be set to either a first setting or a second setting,
wherein, if the adjustment element (2, 39) is in the first setting, the fieldbus component (1, 34) is designed to transmit data that are to be transmitted to a cloud to the public cloud (4, 37) in accordance with the first data transmission mode and, if the adjustment element (2, 39) is in the second setting, to transmit data that are to be transmitted to a cloud to the private cloud (8, 27, 38) in accordance with the second data transmission mode.

2. Fieldbus component as claimed in Claim 1, **characterized in that** the adjustment element comprises at least one of the following elements: a switching element, a changeover switch, a changeover element, a Dual-In-Line switch, a configuration element, a plug-in element, a plug, a jumper, a plug-in jumper, a shorting plug.

3. Fieldbus component as claimed in Claim 1 or Claim 2, **characterized by** at least one of the following elements:
- the adjustment element is an adjustment element implemented in hardware;
- the adjustment element can be set to the first position or the second position by mechanical actuation;
- the adjustment element is arranged or can be arranged on a board of the fieldbus component;
- the adjustment element is a plug-in element that can be plugged into pins of a board of the fieldbus component.

4. Fieldbus component as claimed in one of the Claims 1 to 3, **characterized by** at least one of the following elements:
- the fieldbus component is designed to transmit the data to a domain name of the public cloud in the first data transmission mode;
- the fieldbus component is designed to transmit the data to a domain name of the private cloud in the second data transmission mode;
- the domain name of the public cloud can be translated to an IP address of the public cloud by means of a name server, and the fieldbus component is designed to transmit the data to the IP address of the public cloud;
- the domain name of the private cloud can be translated to ab IP address of the private cloud by means of a name server and the fieldbus component is designed to transmit the data to the IP address of the private cloud;
- the IP address of the private cloud is the IP address of a connection device or a cloud server;
- the fieldbus component is designed to transmit the data to an IP address of a public cloud in the first data transmission mode;
- the fieldbus component is designed to transmit the data to an IP address of a private cloud in the second data transmission mode.

5. Fieldbus component as claimed in one of the Claims 1 to 4, **characterized in that** the fieldbus component comprises a first protocol stack, wherein the fieldbus component is designed to use the first protocol stack in the first data transmission mode for the transmission of data to the public cloud, and the fieldbus component is designed to also use the first protocol stack in the second data transmission mode for the transmission of data to the private cloud.

6. Fieldbus component as claimed in Claim 5, **characterized in that** the first protocol stack is a HTTP or HTTPS protocol stack.

7. Fieldbus component as claimed in one of the Claims 1 to 4, **characterized in that** the fieldbus component comprises a first protocol stack and a second protocol stack, wherein the fieldbus component is designed to use the first protocol stack in the first data transmission mode for the transmission of data to the public cloud and to use the second protocol stack in the second data transmission mode for the transmission of data to the private cloud.

8. Fieldbus component as claimed in one of the Claims 1 to 4 or Claim 7, **characterized in that** the fieldbus component is designed to switch between a first protocol stack and a second protocol stack when switching between the first data transmission mode and the second data transmission mode.

9. Fieldbus component as claimed in Claim 7 or Claim 8, **characterized in that** the first protocol stack is a HTTP or HTTPS protocol stack and **in that** the second protocol stack is an Industrial Ethernet protocol stack.

10. Fieldbus component as claimed in one of the Claims 1 to 9, **characterized in that** the fieldbus component is designed to use a predefined domain name to address the public cloud in the first data transmission mode.

11. Fieldbus component as claimed in one of the Claims 1 to 10, **characterized by** at least one of the following elements :
- the fieldbus component is designed to generate a domain name of the private cloud for addressing the private cloud;
- the fieldbus component is designed to generate a domain name of the private cloud according to a predefined formation scheme for addressing the private cloud;
- the fieldbus component is designed to generate a domain name of the private cloud according to a predefined formation scheme for addressing the private cloud, wherein the fieldbus component is designed to form the domain name of the private cloud starting from a local domain in which the fieldbus component is located;
- the fieldbus component is designed to generate a domain name of the private cloud for addressing the private cloud, wherein the fieldbus component is designed to create the domain name of the private cloud from a predefined part of the name and a local domain in which the fieldbus component is located;
- the fieldbus component is designed to determine a local domain on the basis of a DHCP allocation received from a DHCP server and to use the local domain determined in this way as the basis to generate a domain name of the private cloud;
- the fieldbus component features a fieldbus interface to connect to a fieldbus;
- the fieldbus component comprises a fieldbus interface to connect to a fieldbus and is designed to transmit the data to be transmitted to the private cloud in the second data transmission mode via the fieldbus;
- the fieldbus is a fieldbus according to an Industrial Ethernet standard;
- the fieldbus is a fieldbus according to one of the following standards: EtherNet/IP, Profinet, EtherCAT, Modbus TCP, HART-IP, OPC, OPC-UA;
- the fieldbus component is one of the following elements: a field device, a gateway device, another component of a fieldbus network.

12. A fieldbus network, which comprises
a fieldbus (20, 40),
a fieldbus component (1 , 34), connected to the fieldbus (20, 40), as claimed in one of the Claims 1 to 12,
a connection device (25) connected to the fieldbus (20, 40) or a cloud server (18) connected to the fieldbus (20, 40).

13. Fieldbus network as claimed in Claim 12, **characterized by** at least one of the following elements:
- the fieldbus network comprises a connection apparatus connected to the fieldbus, wherein the fieldbus component is designed to transmit data which are to be transmitted to the cloud in the second transmission mode to the connection apparatus via the fieldbus;
- the fieldbus network comprises a connection apparatus connected to the fieldbus, wherein the connection apparatus is designed to transmit data received by the fieldbus component to the private cloud.

14. Fieldbus network as claimed in Claim 12, **characterized by** at least one of the following elements:
- the fieldbus network comprises a cloud server connected to the fieldbus, wherein the fieldbus component is designed to transmit data that are to be transmitted to the cloud in the second transmission mode to the cloud server via the fieldbus;
- the fieldbus network comprises a cloud server connected to the fieldbus, wherein the cloud server comprises a storage unit designed to store data received from the fieldbus component.

15. Procedure designed transmit data from a fieldbus component (1, 34) to a cloud, wherein
the fieldbus component (1, 34) is designed to transmit data that are to be transmitted to a cloud either to a public cloud (4, 37) in a first data transmission mode, or to a private cloud (8, 27, 38) in a second data transmission,
wherein the fieldbus component (1, 34) comprises an adjustment element (2, 39) that can be set to either a first setting or a second setting,
wherein said procedure comprises the following steps:
Setting of the adjustment element (2, 39) of the fieldbus component (1, 34) to a first setting or a second setting;
Transmission of the data to be transmitted to a cloud to the public cloud (4, 37) if the adjustment element (2, 39) is set to the first setting, or transmission of the data to be transmitted to a cloud to the private cloud (8, 27, 38) if the adjustment element (2, 39) is set to the second setting.

## Revendications

1. Composant de bus de terrain (1, 34), **caractérisé en ce que**
le composant de bus de terrain (1, 34) est conçu pour transmettre les données à transmettre à un cloud soit dans un premier mode de transmission de données à un cloud public (4, 37), soit dans un second mode de transmission de données à un cloud privé (8, 27, 38), le composant de bus de terrain (1, 34) comprenant un élément de réglage (2, 39) pouvant être amené sélectivement dans un premier réglage ou dans un second réglage,
le composant de bus de terrain (1, 34) étant conçu, lorsque l'élément de réglage (2, 39) est dans le premier réglage, pour transmettre les données à transmettre à un cloud conformément au premier mode de transmission de données au cloud public (4, 37) et, lorsque l'élément de réglage (2, 39) est dans le second réglage, pour transmettre les données à transmettre à un cloud conformément au second mode de transmission de données au cloud privé (8, 27, 38).

2. Composant de bus de terrain selon la revendication 1, **caractérisé en ce que** l'élément de réglage comprend au moins l'un des éléments suivants : un élément de commutation, un commutateur, un élément d'inversion, un commutateur Dual-In-Line, un élément de configuration, un élément enfichable, un connecteur, un cavalier, un pont enfichable, un connecteur de court-circuitage.

3. Composant de bus de terrain selon la revendication 1 ou la revendication 2, **caractérisé par** au moins un des éléments suivants :
- l'élément de réglage est un élément de réglage réalisé dans le matériel ;
- l'élément de réglage peut être amené, sélectivement, dans la première position ou dans la deuxième position par un actionnement mécanique ;
- l'élément de réglage est disposé ou peut être disposé sur une carte de circuit imprimé du composant de bus de terrain ;
- l'élément de réglage est un élément enfichable qui peut être enfiché sur les broches d'une carte de circuit imprimé du composant de bus de terrain.

4. Composant de bus de terrain selon au moins l'une des revendications 1 à 3, **caractérisé par** au moins l'un des éléments suivants :
- le composant de bus de terrain est conçu pour transmettre les données à un nom de domaine du cloud public dans le premier mode de transmission de données ;
- le composant de bus de terrain est conçu pour transmettre les données à un nom de domaine du cloud privé dans le second mode de transmission de données ;
- le nom de domaine du cloud public peut être traduit en une adresse IP du cloud public au moyen d'un serveur de noms, et le composant de bus de terrain est conçu pour transmettre les données à l'adresse IP du cloud public ;
- le nom de domaine du cloud privé peut être traduit en une adresse IP du cloud privé au moyen d'un serveur de noms et le composant de bus de terrain est conçu pour transmettre les données à l'adresse IP du cloud privé ;
- l'adresse IP du cloud privé est l'adresse IP d'un appareil de liaison ou d'un serveur de cloud ;
- le composant de bus de terrain est conçu pour transmettre les données à une adresse IP d'un cloud public dans le premier mode de transmission de données ;
- le composant de bus de terrain est conçu pour transmettre les données à une adresse IP d'un cloud privé dans le second mode de transmission de données.

5. Composant de bus de terrain selon au moins l'une des revendications 1 à 4, **caractérisé en ce que** le composant de bus de terrain comprend une première pile de protocoles, le composant de bus de terrain étant conçu pour utiliser la première pile de protocoles dans le premier mode de transmission de données pour la transmission de données vers le cloud public, et le composant de bus de terrain étant conçu pour utiliser également la première pile de protocoles dans le second mode de transmission de données pour la transmission de données vers le cloud privé.

6. Composant de bus de terrain selon la revendication 5, **caractérisé en ce que** la première pile de protocoles est une pile de protocoles HTTP ou HTTPS.

7. Composant de bus de terrain selon au moins l'une des revendications 1 à 4, **caractérisé en ce que** le composant de bus de terrain comprend une première pile de protocoles et une seconde pile de protocoles, le composant de bus de terrain étant conçu pour utiliser la première pile de protocoles dans le premier mode de transmission de données pour la transmission de données vers le cloud public et pour utiliser la seconde pile de protocoles dans le second mode de transmission de données pour la transmission de données vers le cloud privé.

8. Composant de bus de terrain selon au moins l'une des revendications 1 à 4 ou la revendication 7, **caractérisé en ce que** le composant de bus de terrain est conçu pour commuter entre une première pile de protocoles et une deuxième pile de protocoles lors de la commutation entre le premier mode de transmission de données et le deuxième mode de transmission de données.

9. Composant de bus de terrain selon la revendication 7 ou la revendication 8, **caractérisé en ce que** la première pile de protocoles est une pile de protocoles HTTP ou HTTPS et que la deuxième pile de protocoles est une pile de protocoles Ethernet industriel.

10. Composant de bus de terrain selon au moins l'une des revendications 1 à 9, **caractérisé en ce que** le composant de bus de terrain est conçu pour utiliser un nom de domaine prédéfini pour l'adressage du cloud public dans le premier mode de transmission de données.

11. Composant de bus de terrain selon au moins l'une des revendications 1 à 10, **caractérisé par** au moins l'un des éléments suivants :
- le composant de bus de terrain est conçu pour générer un nom de domaine du cloud privé pour l'adressage du cloud privé ;
- le composant de bus de terrain est adapté pour générer un nom de domaine du cloud privé selon un schéma de formation prédéfini pour l'adressage du cloud privé ;
- le composant de bus de terrain est conçu pour générer un nom de domaine du cloud privé selon un schéma de formation prédéfini pour l'adressage du cloud privé, le composant de bus de terrain étant conçu pour former le nom de domaine du cloud privé à partir d'un domaine local, dans lequel le composant de bus de terrain est situé ;
- le composant de bus de terrain est conçu pour générer un nom de domaine du cloud privé pour l'adressage du cloud privé, le composant de bus de terrain étant conçu pour composer le nom de domaine du cloud privé à partir d'une partie de nom prédéfinie et d'un domaine local, dans lequel le composant de bus de terrain est situé ;
- le composant de bus de terrain est conçu pour déterminer un domaine local sur la base d'une affectation DHCP reçue d'un serveur DHCP et pour utiliser le domaine local ainsi déterminé comme base pour générer un nom de domaine du cloud privé ;
- le composant de bus de terrain comprend une interface de bus de terrain pour la connexion à un bus de terrain ;
- le composant de bus de terrain comprend une interface de bus de terrain pour la connexion à un bus de terrain et est conçu pour transmettre les données à transmettre au cloud privé dans le second mode de transmission de données via le bus de terrain ;
- le bus de terrain est un bus de terrain conforme à une norme Ethernet industriel ;
- le bus de terrain est un bus de terrain selon l'une des normes suivantes : EtherNet/IP, Profinet, EtherCAT, Modbus TCP, HART-IP, OPC, OPC-UA ;
- le composant de bus de terrain est l'un des éléments suivants : un appareil de terrain, un appareil de passerelle, un autre composant d'un réseau de bus de terrain.

12. Un réseau de bus de terrain, lequel comprend
un bus de terrain (20, 40),
un composant de bus de terrain (1 , 34), connecté au bus de terrain (20, 40), selon l'une des revendications 1 à 12,
un appareil de liaison (25) connecté au bus de terrain (20, 40) ou un serveur de cloud (18) connecté au bus de terrain (20, 40).

13. Réseau de bus de terrain selon la revendication 12, **caractérisé par** au moins un des éléments suivants :
- le réseau de bus de terrain comprend un dispositif de liaison connecté au bus de terrain, le composant de bus de terrain étant conçu pour transmettre au dispositif de liaison, via le bus de terrain, les données à transmettre au cloud dans le second mode de transmission ;
- le réseau de bus de terrain comprend un dispositif de liaison connecté au bus de terrain, le dispositif de liaison étant conçu pour transmettre au cloud privé les données reçues du composant de bus de terrain.

14. Réseau de bus de terrain selon la revendication 12, **caractérisé par** au moins un des éléments suivants :
- le réseau de bus de terrain comprend un serveur de cloud connecté au bus de terrain, le composant de bus de terrain étant conçu pour transmettre les données à transmettre au cloud dans le second mode de transmission via le bus de terrain au serveur de cloud ;
- le réseau de bus de terrain comprend un serveur de cloud connecté au bus de terrain, le serveur de cloud comprenant un dispositif de stockage destiné à stocker les données reçues du composant de bus de terrain.

15. Procédé destiné à la transmission de données à partir d'un composant de bus de terrain (1, 34) dans un cloud, le composant de bus de terrain (1, 34) étant conçu pour transmettre des données à transmettre à un cloud, soit dans un premier mode de transmission de données à un cloud public (4, 37) 35, soit dans un second mode de transmission de données à un cloud privé (8, 27, 38),
le composant de bus de terrain (1, 34) comprenant un élément de réglage (2, 39) pouvant être amené sélectivement dans un premier réglage ou dans un second réglage, le procédé comprenant les étapes suivantes :
Passage de l'élément de réglage (2, 39) du composant de bus de terrain (1, 34) dans un premier réglage ou dans un second réglage ;
Transmission des données à transmettre vers un cloud dans un cloud public (4, 37) si l'élément de réglage (2, 39) est dans le premier réglage, ou transmission des données à transmettre vers un cloud vers le cloud privé (8, 27, 38) si l'élément de réglage (2, 39) est dans le second réglage.
